# EUROPÄISCHE PATENTSCHRIFT

(11) **EP 2 710 279 B1**
(45) Veröffentlichungstag und Bekanntmachung des Hinweises auf die Patenterteilung: **10.07.2019**
(21) Anmeldenummer: 12719698.8
(22) Anmeldetag: 07.05.2012
(51) Int. Cl.: F16G 1/10, F16G 1/12, F16G 1/28, F16G 5/08, F16G 5/10, F16G 5/20

(54) **ANTRIEBSRIEMEN MIT EINEM VERSTÄRKUNGSBAND ODER EINEM VERSTÄRKUNGSGEFLECHT ODER MIT ZONENWEISE ANGEORDNETEN VERSTÄRKUNGSELEMENTEN INNERHALB DES UNTERBAUS**
DRIVE BELT HAVING A REINFORCEMENT BAND OR A BRAIDED REINFORCEMENT SECTION OR HAVING REINFORCEMENT ELEMENTS ARRANGED IN SOME ZONES WITHIN THE CARCASS
COURROIE D'ENTRAÎNEMENT PRÉSENTANT UNE BANDE DE RENFORCEMENT OU UNE TRESSE DE RENFORCEMENT, OU DES ÉLÉMENTS DE RENFORCEMENT DISPOSÉS PAR ZONES, À L'INTÉRIEUR DE L'INFRASTRUCTURE

(30) Priorität: 19.05.2011 DE 102011050483
(43) Veröffentlichungstag der Anmeldung: 26.03.2014
(73) Patentinhaber: ContiTech Antriebssysteme GmbH, 30165 Hannover (DE)
(72) Erfinder: FISS, Tim, 30519 Hannover (DE)
(74) Vertreter: Preusser, Andrea
(86) Internationale Anmeldenummer: PCT/EP2012/058349
(87) Internationale Veröffentlichungsnummer: WO 2012/156223

(56) Entgegenhaltungen:
- EP-A1- 0 084 702
- EP-A2- 1 439 322
- DE-A1- 2 655 182
- FR-A1- 2 589 209
- SU-A1- 1 033 794
- US-A- 1 982 869
- US-A- 2 514 429
- US-A- 5 322 479

## Beschreibung

Die Erfindung betrifft einen Antriebsriemen mit einem elastischen Grundkörper auf der Basis eines Vulkanisats, umfassend eine Decklage als Riemenrücken und einen Unterbau mit einer Kraftübertragungszone, wobei in dem Grundkörper ein Zugträger eingebettet ist und wobei ferner die Kraftübertragungszone mit einer Beschichtung versehen ist.

Der Antriebsriemen kann konstruktiv als Flachriemen, Keilriemen, Keilrippenriemen oder Zahnriemen ausgebildet sein. Sein Einsatz erstreckt sich auf den Fahrzeug- und Maschinenbau. Auch bei Aufzügen spielt er eine besondere Rolle. Eine zunehmend herausragende Bedeutung hat dabei der Keilrippenriemen und der Zahnriemen. Diesbezüglich wird insbesondere auf folgende Patentliteratur verwiesen: DE 38 23 157 A1, DE 44 00 434 A1, DE 100 16 351 A1, DE 10 2006 007 509 A1, DE 10 2010 060 216 A1, EP 1 431 358 A1, EP 1 818 567 A1, EP 2 101 079 A2, WO 02/084144 A1, WO 96/02584 A1, WO 2005/080821 A1, WO 2006/066669 A1, US 3 981 206, US 5 417 618, US 6 793 599 B2, US 6 824 485 B2 und US 2008/0207371 A1.

Antriebsriemen werden zur Geräuschreduzierung wie auch zur Erhöhung der Abriebsbeständigkeit insbesondere im Bereich der Kraftübertragungszone mit einer Beschichtung versehen. Der diesbezügliche Stand der Technik ist:
- Eingesetzt wird eine Flockauflage (DE 100 16 351 A1), insbesondere in Form eines Baumwoll- oder Aramidflocks, oder eine dünne mit Fasern (z.B. Aramidfasern) gefüllte elastische Polymerschicht, beispielsweise nach der Offenlegungsschrift DE 38 23 157 A1, wobei die Anhaftung der Flockauflage zumeist mittels einer Lösung erfolgt. Bei manchen Motoren wirkt jedoch diese Beschichtung nicht dauerhaft. Außerdem treten hier bei manchen Motoren Geräuschprobleme bei Feuchtigkeit auf.

- In der Offenlegungsschrift DE 44 00 434 A1 wird eine Beschichtung aus vernetztem Fluorpolymeranteil beschrieben. Nachteilig ist, dass die Beschichtung auf manchen Motoren nicht dauerhaft ist, verbunden mit einem Verlust der Funktion durch Verschleiß. Außerdem reagiert der Sprühprozess empfindlich auf die Änderung von Umgebungsbedingungen (Luftfeuchte, Temperatur). Darüber hinaus behindert die Zeit für Lacktrocknung einen effizienten Herstellungsprozess.
- Aus der Offenlegungsschrift EP 1 431 358 A1 ist eine Lackbeschichtung auf Acrylat- und Polyurethanbasis bekannt. Diese Beschichtung ist ebenfalls auf manchen Motoren nicht dauerhaft, verbunden mit einem Verlust der Funktion durch Verschleiß. Darüber hinaus behindert auch hier die Zeit für die Lacktrocknung einen effizienten Herstellungsprozess.
- Verwendet wird eine gestrickte Textilauflage, beispielsweise nach der Patentschrift US 3 981 206. Der Nachteil ist hier, dass auf Prüfmotoren bei Feuchtigkeit Geräusche entstehen.
- Verwendet wird eine Textilauflage in Form eines Gewirkes. Diesbezüglich wird insbesondere auf die Offenlegungsschrift DE 10 2006 007 509 A1 verwiesen. Die Kettwirkware besteht dabei aus einem ersten Garn, insbesondere aus einem Polyamid (PA) oder Polyester (PES), und aus einem zweiten Garn, insbesondere aus einem Polyurethan (PU). Nachteilig ist auch hier, dass auf Prüfmotoren bei Feuchtigkeit ebenfalls Geräusche entstehen.
- Die Textilauflage ist ein PA6.6-Strechgewebe und wird insbesondere bei Zahnriemen verwendet, wobei hier insbesondere die Offenlegungsschrift EP 1 818 567 A1 zu nennen ist. Ein PA6.6-Strechgewebe ist jedoch relativ teuer.
- Aus der Offenlegungsschrift WO 02/084144 A1 ist bekannt, einen Zahnriemen mit einer thermoplastischen Oberflächenschicht zu versehen, wobei insbesondere PA eingesetzt wird.
- In der Offenlegungsschrift WO2005/080821 A1 wird ein Zahnriemen beschrieben, dessen Decklage und Kraftübertragungszone mit einer Textilauflage versehen ist, wobei wiederum die Textilauflage mit einem ölbeständigen Kunststoff präpariert ist. Als Kunststoff wird dabei ein Fluorkunststoff, beispielsweise Polytetrafluorethylen (PTFE), eingesetzt.
- Für manche PU-Riemen wird ein Gewebe als Textilauflage, insbesondere aus PA6.6, verwendet, bei dem eine Folie, beispielsweise eine Polyethylenfolie, außen auf die Gewebeauflage aufgebracht wird. Die Folie ist jedoch ein Verfahrenshilfsmittel. Bei der Ausformung der Zähne mit dem Gieß-PU wird verhindert, dass das flüssige PU durch das Gewebe fließt. Das Gewebe vernetzt aber nicht mit dem PU und hat keine sonstige Funktion. Zum Stand der Technik von PU-Riemen wird beispielsweise auf die Offenlegungsschrift WO 96/02584 A1 verwiesen.
- In der Patentschrift US 6 793 599 B2 wird eine Vliesbeschichtung vorgestellt. Klassische Vliese aus bei Vulkanisationsbedingungen nicht schmelzenden Materialien zeigen eine schlechte Abriebbeständigkeit, weswegen der Einsatz auf den Reibflächen als Verschleißschutz bei reibschlüssigen Antriebsriemen bei den meisten Anwendungen, beispielsweise beim Keilrippenriemen für KFZ-Anwendung, nicht ausreicht. Klassische Vliese sind ferner nicht ausreichend elastisch, um insbesondere das Ausformen von Keilrippenriemen im Formverfahren zu ermöglichen. Der dadurch hervorgerufene Vulkanisatdurchtritt kann das positive Geräuschverhalten verschlechtern.
- Aus der Patentschrift US 6 824 485 B2 ist eine Vliesbeschichtung mit zusätzlich eingelagertem Gleitmittel bekannt. Hinsichtlich der Nachteile gilt hier das gleiche, was bereits in Verbindung mit der Patentschrift US 6 793 599 B2 dargelegt wurde.
- Nach einer Entwicklung gemäß DE 10 2008 012 044 A1 werden anstelle der Textilauflagen oder in Kombination mit diesen eine Folie (z.B. PTFE-Folie) oder ein Folienverbund (z.B. PA-PTFE-Folienverbund) eingesetzt, insbesondere unter dem Aspekt der ölbeständigen Ausrüstung eines Antriebsriemens. In diesem Zusammenhang wird ferner auf die Offenlegungsschrift US 2008/0207371 A1 verwiesen, wo ein Antriebsriemen, insbesondere ein Keilrippenriemen, mit einer Beschichtung in Form eines Films oder Folie aus einem thermoplastischen Kunststoff offenbart wird. Diese Beschichtung führt im Formverfahren bei der Herstellung von Keilrippenriemen zu Ausformproblemen.
- In der Offenlegungsschrift DE 10 2008 055 497 A1 wird ein Artikel, insbesondere ein Antriebsriemen, vorgestellt, wobei die Beschichtung eine Textilauflage aus einem Gewebe, Gewirke, Gestrick oder Vlies ist. Zwischen dem Grundkörper auf der Basis eines Vulkanisats und der Textilauflage ist ein Haftvermittler aus einem Kunststoff angeordnet, wobei der Kunststoff derart beschaffen ist, dass dieser bei der Vulkanisation schmilzt und dabei unter Mitvernetzung in die Textilauflage eindringt, verbunden mit einem dauerfesten Haftverbund von Grundkörper und Textilauflage. Der Haftvermittler ist beispielsweise eine Folie aus Polyethylen (PE).
- Die Beschichtung ist eine Reaktionsmasse, wobei ein Isocyanat mit wenigstens zwei NCO-Gruppen mit Wasser und/oder einem Diol und/oder einem Polyol zu einem Polymerisat ausreagiert. Diesbezüglich wird insbesondere auf die Entwicklung gemäß EP 2 101 079 A2 verwiesen.

Die Vielzahl der Lösungsansätze für Beschichtungen von Antriebsriemen mit ihren Vorteilen und Nachteilen zeigt, dass die diesbezügliche Entwicklung noch nicht abgeschlossen ist.

Im Folgenden wird insbesondere die Problematik bei Zahnriemen näher erläutert.
- Die aus der Unterbaumischung geformten Zähne neigen unter hoher Last zu starker Deformation. Bei zu hoher Deformation kommt es zum Zahnabscheren und somit zur Schädigung des Zahnriemens.
- Die Zahndeformation führt weiterhin bei synchron anzutreibenden Scheiben zu einem Verdrehfehler.
- Wenn die Beschichtung des Zahnriemens vollständig verschlissen ist, liegt im Stegbereich des Zugträgers, der zumeist in Form mehrerer parallel angeordneter Zugstränge vorliegt, frei und werden in kurzer Zeit so stark beschädigt, dass der Zahnriemen ausfällt. Der Schädigungsmechanismus erfolgt dabei lautlos. Der Ausfall des Zahnriemens erfolgt somit ohne Vorwarnung für den Endnutzer plötzlich.
- In einer Reihe von Medien quillt die Mischung des Zahnriemens. Diese Quellung führt zu einer Breitenzunahme des Riemens und zu einer Vergrößerung des Zahnvolumens. In der Folge kommt es durch diese Geometrieabweichungen zur Schädigung des Zahnriemens.

Bei anderen Formen von Antriebsriemen können ebenfalls nach dem vollständigen Verschleiß der Beschichtung ähnliche Probleme auftreten, insbesondere bei einem Keilrippenriemen.

Im Rahmen einer Weiterentwicklung besteht die Aufgabe der Erfindung darin, einen gattungsgemäßen Antriebsriemen bereitzustellen, dessen Unterbau unabhängig von seiner konstruktiven Gestaltung belastbar ist und der zudem unter Schutz des Zugträgers noch funktionstüchtig ist, wenn die Beschichtung der Kraftübertragungszone partiell oder vollständig verschlissen ist.

Gelöst wird diese Aufgabe dadurch, dass innerhalb des Unterbaus zwischen dem Zugträger und der Beschichtung ein Verstärkungsband oder ein Verstärkungsgeflecht oder zonenweise angeordnete Verstärkungselemente eingebettet sind.

Im Folgenden werden vorteilhafte Gestaltungsvarianten des neuen Antriebsriemens näher vorgestellt.
- Das Verstärkungsband oder das Verstärkungsgeflecht oder die Verstärkungselemente bestehen aus einem Metall oder einer Metalllegierung. Der Werkstoff ist dabei insbesondere Metall oder verzinktes Metall. Bei dem Verstärkungsgeflecht liegt zumeist ein Drahtgeflecht vor. Das Verstärkungsband oder das Verstärkungsgeflecht oder die Verstärkungselemente können zudem mit einem Haftvermittler, beispielsweise in Form einer Haftmischung oder eines Haftzementes, versehen sein. Auf diese Weise wird eine verbesserte Haftung zum Vulkanisat des Unterbaus erzielt.
- Nach einer Werkstoffalternative können das Verstärkungsband oder das Verstärkungsgeflecht oder die Verstärkungselemente auch aus einem hochfesten Kunststoff bestehen. Dies ist ein schlagzäher Kunststoff mit metallähnlichen Eigenschaften. Von besonderer Bedeutung ist ein Kunststoff auf der Basis von Polyphenylenether (PPE), das unter der Markenbezeichnung VESTORAN® der Firma Evonik Degussa GmbH in verschiedenen Modifikationen erhältlich ist. Dieser Kunststoff zeichnet sich zudem durch eine hohe Wärmeformbeständigkeit aus. Das Verstärkungsband oder das Verstärkungsgeflecht oder die Verstärkungselemente können auch hier mit einem Haftvermittler der oben genannten Art versehen sein.
- Das Verstärkungsband oder die Verstärkungselemente sind für den Vulkanisatdurchtritt mit einer Perforierung versehen, beispielsweise in Form eines gelochten Verstärkungsbandes. Auf diese Weise ist auch ohne einen Haftvermittler eine gute Anbindung zum Vulkanisat des Unterbaus gewährleistet.
- Die Stärke des Verstärkungsbandes oder des Verstärkungsgeflechts oder der Verstärkungselemente beträgt ≤ 0,5 mm, und zwar insbesondere in einem Bereich von 0,1 mm bis 0,5 mm. Der besonders bevorzugte Bereich liegt dabei zwischen 0,1 mm und 0,3 mm.
- Der Grundkörper ist insbesondere ein Vulkanisat auf der Basis einer vulkanisierten Kautschukmischung, enthaltend wenigstens eine Kautschukkomponente und Mischungsingredienzien. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluorkautschuk (FKM), Naturkautschuk (NR), Styrol-Butadien-Kautschuk (SBR) oder Butadien-Kautschuk (BR) eingesetzt, die unverschnitten oder mit wenigstens einer weiteren Kautschukkomponente, insbesondere mit einem der vorgenannten Kautschuktypen, verschnitten sind, beispielsweise in Form eines EPM/EPDM- oder SBR/BR-Verschnittes. Von besonderer Bedeutung ist dabei EPM oder EPDM oder HNBR oder ein Verschnitt der vorgenannten Kautschuktypen. Die Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.
- Das Vulkanisat ist insbesondere peroxidisch vernetzt, wobei die üblichen Vulkanisationstemperaturen bei 130 bis 200 °C liegen. Die peroxidische Vernetzung sorgt unter anderem für eine gute Anbindung der Beschichtung zum Grundkörper, vor allem bei einer Kunststoffbeschichtung.
- Hinsichtlich der Beschichtung der Kraftübertragungszone gibt es nach dem eingangs genannten Stand der Technik eine Vielzahl von Möglichkeiten. Bedingt durch den Einbau des Verstärkungsbandes oder des Verstärkungsgeflechts oder der Verstärkungselemente innerhalb des Unterbaus des Antriebsriemens können die bei manchen Beschichtungsarten auftretenden Nachteile kompensiert werden. Von besonderer Bedeutung ist jedoch der Einsatz einer Textilauflage als Beschichtung, insbesondere in Form eines Gewebes.
- Darüber hinaus besteht die Möglichkeit, in die Beschichtung zusätzlich Partikel einzuarbeiten, insbesondere unter dem Aspekt der Reibbeiwertssenkung sowie der Beständigkeit gegenüber Chemikalien, Ölen und Hitze. Diese Partikel können aus Silicon und/oder Polyurethan und/oder aus einem fluorhaltigen Kunststoff bestehen. Zu nennen sind als fluorhaltige Kunststoffe, insbesondere Polyvinylfluorid (PVF), Polyvinylidenfluorid (PVDF) und Polytetrafluorethylen (PTFE). Von besonderer Bedeutung ist dabei PTFE. Auch Graphit oder Moylybdänsulfid (MoS) kann eingemischt sein.
- Der Antriebsriemen ist ein Zahnriemen, dessen Unterbau einen Zahnbereich und einen Stegbereich umfasst. Nach einer bevorzugten ersten Alternative ist im Unterbau unter Erfassung des gesamten Zahnbereichs und Stegbereichs ein durchgehendes Verstärkungsband oder durchgehendes Verstärkungsgeflecht eingebettet. Das Verstärkungsband oder Verstärkungsgeflecht kann dabei wellenförmig oder mäanderförmig verlaufen. Nach einer zweiten Alternative ist ausschließlich der Zahnbereich mit Verstärkungselementen versehen, die sich der Konstruktion des Zahnbereichs anpasst. Die Verstärkung des Unterbaus erfolgt hier also zonenweise bzw. partiell.
- Der Antriebsriemen ist ein Keilrippenriemen, dessen Unterbau einen Keilrippenbereich und einen Stegbereich umfasst. Nach einer ersten Variante ist im Unterbau unter Erfassung des gesamten Keilrippenbereichs und Stegbereichs ein durchgehendes Verstärkungsband oder ein durchgehendes Verstärkungsgeflecht eingebettet. Das Verstärkungsband oder Verstärkungsgeflecht kann auch hier wellenförmig oder mäanderförmig verlaufen. Nach einer bevorzugten zweiten Variante ist ausschließlich der Keilrippenbereich mit Verstärkungselemente versehen, die sich der Konstruktion des Keilrippenbereichs anpassen. Die Verstärkung des Unterbaus erfolgt auch hier zonenweise bzw. partiell.

Die Erfindung wird nun anhand zweier Ausführungsbeispiele unter Bezugnahme auf schematische Zeichnungen erläutert. Es zeigen:
- Fig. 1: einen Zahnriemen mit einem wellenförmig verlaufenden Verstärkungsband, und zwar unter Erfassung des gesamten Zahnbereichs und Stegbereichs;
- Fig. 2: einen Keilrippenriemen mit Verstärkungselementen ausschließlich innerhalb des Keilrippenbereiches.

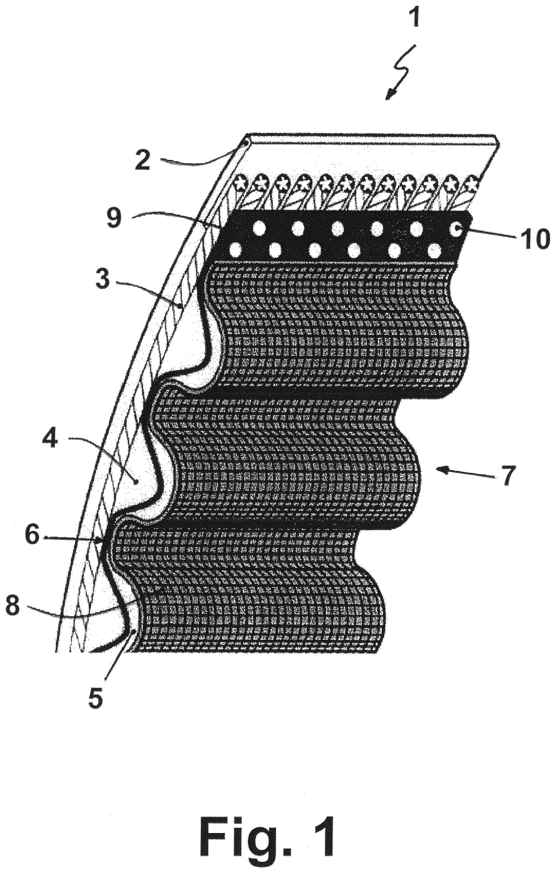

Die Figur 1 zeigt einen Antriebsriemen 1, der als Zahnriemen ausgebildet ist, mit einer Decklage 2 als Riemenrücken, einem Zugträger 3 mit in Längsrichtung verlaufenden parallel angeordneten Zugsträngen in Form von Einzelcorden sowie mit einem Unterbau 4. Die Decklage und der Unterbau bilden den elastischen Grundkörper auf der Basis eines Vulkanisats, beispielsweise auf der Basis von HNBR. Der Unterbau weist eine Struktur auf, gebildet aus einem Zahnbereich 5 und einem Stegbereich 6. Der Unterbau umfasst dabei die Kraftübertragungszone 7.

Die Beschichtung 8, die die Kraftübertragungszone 7 erfasst, besteht aus einem Beschichtungskonzept nach dem eingangs genannten Stand der Technik, insbesondere aus einem Gewebe.

Der Zugträger 3 besteht beispielsweise aus Stahl, Polyamid, Aramid, Glasfasern, Kohlefasern, Basaltfasern, Polyethylentherephthalat (PET), Polyetheretherketon (PEEK) oder Polyethylen-2,6-naphthalat (PEN).

Die Decklage 2 kann frei von einer Beschichtung sein oder ebenfalls mit einem Beschichtungskonzept nach dem eingangs genannten Stand der Technik versehen sein. Die Beschichtung für die Decklage 2 kann beispielsweise aus einem Gewebe gebildet sein.

Der neue Antriebsriemen 1 in Form eines Zahnriemens zeichnet sich nun dadurch aus, dass innerhalb dessen Unterbaus 4 zwischen dem Zugträger 3 und der Beschichtung 8 ein Verstärkungsband 9 eingebettet ist. Das durchgehend und wellenförmig verlaufende Verstärkungsband, beispielsweise in Form eines Stahlbandes, erfasst dabei den gesamten Zahnbereich 5 und Stegbereich 6. Außerdem ist das Verstärkungsband für den Vulkanisatdurchtritt mit einer Perforierung 10 versehen, und zwar in Form eines durchgehenden Lochbandes, wobei von Lochreihe zu Lochreihe die Löcher versetzt zueinander angeordnet sind. Das Verstärkungsband ist dünn genug auszuführen, um die Biegewechselbelastung im Stegbereich 6 dauerhaft zu ertragen.

Anhand des Zahnriemens 1 werden nun die Vorteile des Verstärkungsbandes 9 zusammengefasst.
- Durch die innere Stützkonstruktion des Verstärkungsbandes 9 wird die Zahnabscherfestigkeit (Deformationswiderstand) der Zähne des Zahnriemens stark erhöht.
- Durch die innere Stützkonstruktion des Verstärkungsbandes 9 wird zudem die Zahndeformation stark verringert, verbunden mit einer Minimierung des Verdrehfehlers.
- Durch das Verstärkungsband 9 zwischen der Beschichtung 8 und dem Zugträger 3 wird im Stegbereich 6 ein zusätzlicher Verschleißschutz für den Zugträger gebildet, der auch nach vollständigem Verschleiß der Beschichtung im Stegbereich noch wirksam ist.
- Durch das Verstärkungsband 9 zwischen der Beschichtung 8 und dem Zugträger 3 macht sich ein erfolgter Beschichtungsverschleiß durch deutlich ansteigende Geräuschentwicklung im Betrieb frühzeitig dem Endanwender bemerkbar.
- Durch die innere Stützkonstruktion des Verstärkungsbandes 9 wird schließlich die Geometrieabweichung infolge Quellung deutlich reduziert.

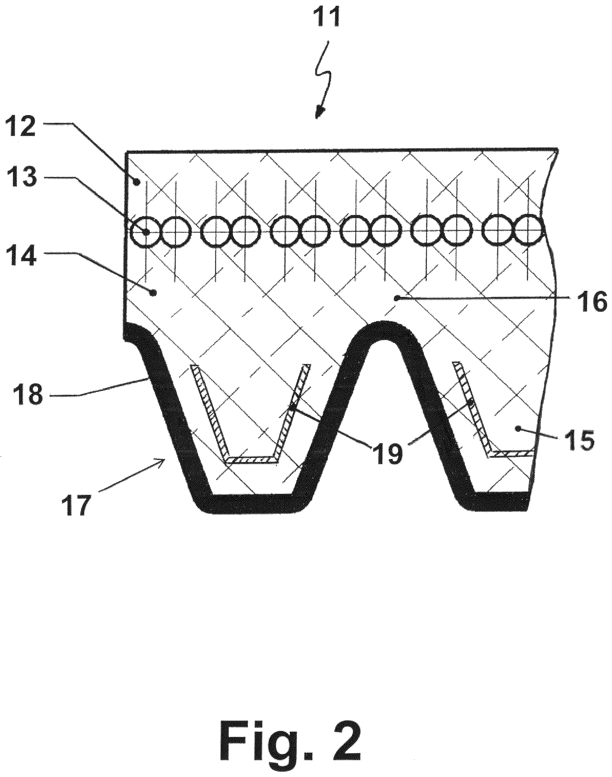

Die Fig. 2 zeigt einen Antriebsriemen 11, der hier als Keilrippenriemen ausgebildet ist, mit einer Decklage 12 als Riemenrücken, einem Zugträger 13 mit in Längsrichtung verlaufenden parallel angeordneten Zugsträngen in Form von Einzelcorden sowie einem Unterbau 14. Die Decklage und der Unterbau bilden auch hier den elastischen Grundkörper auf der Basis eines Vulkanisats, beispielsweise auf der Basis von EPDM. Der Unterbau weist eine Struktur auf, gebildet aus einem Keilrippenbereich 15 und einem Stegbereich 16. Der Unterbau umfasst dabei die Kraftübertragungszone 17, die mit einer Beschichtung 18 versehen ist.

Hinsichtlich der Gestaltungsmöglichkeiten des Zugträgers 13 und der Beschichtung 18 wird auf die Beschreibung der Fig. 1 verwiesen.

Der neue Antriebsriemen 1 in Form eines Keilrippenriemens zeichnet sich nun dadurch aus, dass innerhalb dessen Unterbaus 14 zwischen dem Zugträger 13 und der Beschichtung 18 innerhalb der Keilrippenbereiche 15 Verstärkungselemente 19, beispielsweise aus Stahl, eingebettet sind. Diese zonenweise angeordneten Verstärkungselemente passen sich dabei der Konstruktion des Keilrippenbereichs 15 an. Der Stegbereich 16 selbst ist bei diesem Ausführungsbeispiel verstärkungsfrei. Diese Verstärkungselemente können während des Herstellungsprozesses beispielsweise durch eine Folie oder ein Gewebe in ihrer Position gehalten werden.

### Bezugszeichenliste

### (Teil der Beschreibung)

- 1: Antriebsriemen in Form eines Zahnriemens
- 2: Decklage
- 3: Zugträger
- 4: Unterbau
- 5: Zahnbereich
- 6: Stegbereich
- 7: Kraftübertragungszone
- 8: Beschichtung
- 9: Verstärkungsband
- 10: Perforierung
- 11: Antriebsriemen in Form einen Keilrippenriemens
- 12: Decklage
- 13: Zugträger
- 14: Unterbau
- 15: Keilrippenbereich
- 16: Stegbereich
- 17: Kraftübertragungszone
- 18: Beschichtung
- 19: Verstärkungselement

## Patentansprüche

1. Antriebsriemen (1, 11) mit einem elastischen Grundkörper auf der Basis eines Vulkanisats, umfassend eine Decklage (2, 12) als Riemenrücken und einen Unterbau (4, 14) mit einer Kraftübertragungszone (7, 17), wobei in dem Grundkörper ein Zugträger (3, 13) eingebettet ist und wobei ferner die Kraftübertragungszone (7, 17) mit einer Beschichtung (8, 18) versehen ist,**dadurch gekennzeichnet, dass** der Antriebsriemen ein Zahnriemen (1) ist, dessen Unterbau (4) einen Zahnbereich (5) und einen Stegbereich (6) umfasst, und dass innerhalb des Unterbaus (4, 14) zwischen dem Zugträger (3, 13) und der Beschichtung (8, 18) ein Verstärkungsband (9) oder ein Verstärkungsgeflecht eingebettet sind, wobei das Verstärkungsband (9) oder das Verstärkungsgeflecht aus einem Metall oder einer Metalllegierung oder aus einem hochfesten Kunststoff bestehen und wobei das Verstärkungsgeflecht ein Drahtgeflecht aus einem Metall oder einer Metalllegierung ist und wobei das Verstärkungsband (9) für den Vulkanisatdurchtritt mit einer Perforierung (10) versehen sind.

2. Antriebsriemen (1, 11) mit einem elastischen Grundkörper auf der Basis eines Vulkanisats, umfassend eine Decklage (2, 12) als Riemenrücken und einen Unterbau (4, 14) mit einer Kraftübertragungszone (7, 17), wobei in dem Grundkörper ein Zugträger (3, 13) eingebettet ist und wobei ferner die Kraftübertragungszone (7, 17) mit einer Beschichtung (8, 18) versehen ist,**dadurch gekennzeichnet, dass** der Antriebsriemen der Antriebsriemen ein Keilrippenriemen (11) ist, dessen Unterbau (14) einen Keilrippenbereich (15) und einen Stegbereich (16) umfasst, und dass innerhalb des Unterbaus (4, 14) zwischen dem Zugträger (3, 13) und der Beschichtung (8, 18) ein Verstärkungsband (9) oder ein Verstärkungsgeflecht oder zonenweise angeordnete Verstärkungselemente (19) eingebettet sind, wobei das Verstärkungsband (9) oder das Verstärkungsgeflecht oder die Verstärkungselemente (19) aus einem Metall oder einer Metalllegierung oder aus einem hochfesten Kunststoff bestehen und wobei das Verstärkungsgeflecht ein Drahtgeflecht aus einem Metall oder einer Metalllegierung ist und wobei das Verstärkungsband (9) oder die Verstärkungselemente (19) für den Vulkanisatdurchtritt mit einer Perforierung (10) versehen sind und wobei der Zahnbereich (5) mit Verstärkungselementen versehen ist, und wobei ausschließlich der Keilrippenbereich (15) mit Verstärkungselementen (19) versehen ist, die sich der Konstruktion des Keilrippenbereichs anpassen.

3. Antriebsriemen nach Anspruch 1 oder 2, **dadurch gekennzeichnet, dass** das Verstärkungsband (9) oder das Verstärkungsgeflecht oder die Verstärkungselemente (19) aus Stahl bestehen.

4. Antriebsriemen nach einem der Ansprüche 1 bis 3, **dadurch gekennzeichnet, dass** die Stärke des Verstärkungsbandes (9) oder des Verstärkungsgeflechts oder der Verstärkungselemente (19) ≤ 0,5 mm beträgt.

5. Antriebsriemen nach Anspruch 1, **dadurch gekennzeichnet, dass** unter Erfassung des gesamten Zahnbereichs (5) und Stegbereichs (6) ein durchgehendes Verstärkungsband (9) oder ein durchgehendes Verstärkungsgeflecht im Unterbau (4) eingebettet ist.

6. Antriebsriemen nach Anspruch 2, **dadurch gekennzeichnet, dass** unter Erfassung des gesamten Keilrippenbereichs (15) und Stegbereichs (16) ein durchgehendes Verstärkungsband oder ein durchgehendes Verstärkungsgeflecht im Unterbau (14) eingebettet ist.

7. Antriebsriemen nach Anspruch 2 oder 6, **dadurch gekennzeichnet, dass** das Verstärkungsband (9) oder das Verstärkungsgeflecht wellenförmig oder mäanderförmig verläuft.

## Claims

1. Drive belt (1, 11) having an elastic, vulcanizate-based main body, comprising a top layer (2, 12) as belt backing and a substructure (4, 14) having a force transmission zone (7, 17), wherein a tension member (3, 13) is embedded in the main body and wherein, furthermore, the force transmission zone (7, 17) is provided with a coating (8, 18), **characterized in that** the drive belt is a toothed belt (1), the substructure (4) of which comprises a tooth region (5) and an interlinking region (6), and **in that**, within the substructure (4, 14), between the tension member (3, 13) and the coating (8, 18), a reinforcing strip (9) or a reinforcing mesh is embedded, wherein the reinforcing strip (9) or the reinforcing mesh consists of a metal or a metal alloy or of a high-strength plastic, and wherein the reinforcing mesh is a wire mesh made of a metal or a metal alloy and wherein the reinforcing strip (9) is provided with a perforation (10) for the vulcanizate to pass through.

2. Drive belt (1, 11) having an elastic, vulcanizate-based main body, comprising a top layer (2, 12) as belt backing and a substructure (4, 14) having a force transmission zone (7, 17), wherein a tension member (3, 13) is embedded in the main body and wherein, furthermore, the force transmission zone (7, 17) is provided with a coating (8, 18), **characterized in that** the drive belt the drive belt is a V-ribbed belt (11), the substructure (14) of which comprises a V-rib region (15) and an interlinking region (16), and **in that**, within the substructure (4, 14), between the tension member (3, 13) and the coating (8, 18), a reinforcing strip (9) or a reinforcing mesh or zonally arranged reinforcing elements (19) are embedded, wherein the reinforcing strip (9) or the reinforcing mesh or the reinforcing elements (19) consist of a metal or a metal alloy or of a high-strength plastic, and wherein the reinforcing mesh is a wire mesh made of a metal or a metal alloy and wherein the reinforcing strip (9) or the reinforcing elements (19) are provided with a perforation (10) for the vulcanizate to pass through, and wherein the tooth region (5) is provided with reinforcing elements, and wherein only the V-rib region (15) is provided with reinforcing elements (19), which conform to the design of the V-rib region.

3. Drive belt according to Claim 1 or 2, **characterized in that** the reinforcing strip (9) or the reinforcing mesh or the reinforcing elements (19) consist of steel.

4. Drive belt according to one of Claim 1 to 3, **characterized in that** the thickness of the reinforcing strip (9) or of the reinforcing mesh or of the reinforcing elements (19) is ≤ 0.5 mm.

5. Drive belt according to Claim 1, **characterized in that**, covering the entire tooth region (5) and interlinking region (6), a continuous reinforcing strip (9) or a continuous reinforcing mesh is embedded in the substructure (4).

6. Drive belt according to Claim 2, **characterized in that**, covering the entire V-rib region (15) and interlinking region (16), a continuous reinforcing strip or a continuous reinforcing mesh is embedded in the substructure (14).

7. Drive belt according to Claim 2 or 6, **characterized in that** the reinforcing strip (9) or the reinforcing mesh extends in an undulating or meandering manner.

## Revendications

1. Courroie d'entraînement (1, 11) dotée d'un corps de base élastique à base d'un produit vulcanisé, comprenant une couche de recouvrement (2, 12) comme dossier de courroie et une infrastructure (4, 14) avec une zone de transmission de force (7, 17), dans laquelle un élément de traction (3, 13) est incorporé dans le corps de base et dans laquelle la zone de transmission de force (7, 17) est en outre munie d'un revêtement (8, 18), **caractérisée en ce que** la courroie d'entraînement est une courroie dentée (1), dont l'infrastructure (4) comprend une région de dent (5) et une région d'âme (6), et **en ce qu'**une bande de renforcement (9) ou une tresse de renforcement est incorporée à l'intérieur de l'infrastructure (4, 14) entre l'élément de traction (3, 13) et le revêtement (8, 18), dans laquelle la bande de renforcement (9) ou la tresse de renforcement se compose d'un métal ou d'un alliage métallique ou d'une matière plastique à haute résistance et dans laquelle la tresse de renforcement est une tresse de fils en un métal ou en un alliage métallique et dans laquelle la bande de renforcement (9) est dotée d'une perforation (10) pour le passage du produit vulcanisé.

2. Courroie d'entraînement (1, 11) dotée d'un corps de base élastique à base d'un produit vulcanisé, comprenant une couche de recouvrement (2, 12) comme dossier de courroie et une infrastructure (4, 14) avec une zone de transmission de force (7, 17), dans laquelle un élément de traction (3, 13) est incorporé dans le corps de base et dans laquelle la zone de transmission de force (7, 17) est en outre munie d'un revêtement (8, 18), **caractérisée en ce que** la courroie d'entraînement la courroie d'entraînement est une courroie à nervures trapézoïdales (11), dont l'infrastructure (14) comprend une région de nervure trapézoïdale (15) et une région d'âme (16), et **en ce qu'**une bande de renforcement (9) ou une tresse de renforcement ou des éléments de renforcement disposés par zones (19) sont incorporés à l'intérieur de l'infrastructure (4, 14) entre l'élément de traction (3, 13) et le revêtement (8, 18), dans laquelle la bande de renforcement (9) ou la tresse de renforcement ou les éléments de renforcement (19) se compose(nt) d'un métal ou d'un alliage métallique ou d'une matière plastique à haute résistance et dans laquelle la tresse de renforcement est une tresse de fils en un métal ou en un alliage métallique et dans laquelle la bande de renforcement (9) ou les éléments de renforcement (19) sont dotés d'une perforation (10) pour le passage du produit vulcanisé et dans laquelle la région de dent (5) est munie d'éléments de renforcement, et dans laquelle seule la région de nervure trapézoïdale (15) est munie d'éléments de renforcement (19), qui s'adaptent à la construction de la région de nervure trapézoïdale.

3. Courroie d'entraînement selon une revendication 1 ou 2, **caractérisée en ce que** la bande de renforcement (9) ou la tresse de renforcement ou les éléments de renforcement (19) sont constitués d'acier.

4. Courroie d'entraînement selon l'une quelconque des revendications 1 à 3, **caractérisée en ce que** l'épaisseur de la bande de renforcement (9) ou de la tresse de renforcement ou des éléments de renforcement (19) vaut ≤ 0,5 mm.

5. Courroie d'entraînement selon la revendication 1, **caractérisée en ce qu'**une bande de renforcement continue (9) ou une tresse de renforcement continue est incorporée dans l'infrastructure (4) en englobant la totalité de la région de dent (5) et de la région d'âme (6).

6. Courroie d'entraînement selon la revendication 2, **caractérisée en ce qu'**une bande de renforcement continue ou une tresse de renforcement continue est incorporée dans l'infrastructure (14) en englobant la totalité de la région de nervure trapézoïdale (15) et la région d'âme (16) .

7. Courroie d'entraînement selon une revendication 2 ou 6, **caractérisée en ce que** la bande de renforcement (9) ou la tresse de renforcement est posée sous forme ondulée ou sous forme sinueuse.
